(19) **Europäisches Patentamt**
**European Patent Office**
**Office européen des brevets**

(11) **EP 4 465 387 A1**

(12) **EUROPEAN PATENT APPLICATION**
published in accordance with Art. 153(4) EPC

(43) Date of publication:
**20.11.2024 Bulletin 2024/47**

(21) Application number: **23898280.5**

(22) Date of filing: **29.11.2023**

(51) International Patent Classification (IPC):
*H01M 4/62* (2006.01)       *H01M 4/136* (2010.01)
*H01M 4/1397* (2010.01)      *H01M 4/58* (2010.01)
*H01M 10/052* (2010.01)      *H01M 4/02* (2006.01)

(52) Cooperative Patent Classification (CPC):
**H01M 4/02; H01M 4/136; H01M 4/1397;**
**H01M 4/58; H01M 4/62; H01M 10/052;** Y02E 60/10

(86) International application number:
**PCT/KR2023/019400**

(87) International publication number:
**WO 2024/117754 (06.06.2024 Gazette 2024/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.12.2022 KR 20220166976**

(71) Applicant: **LG Energy Solution, Ltd.**
**Seoul 07335 (KR)**

(72) Inventors:
• **YOO, Houng Sik**
**Daejeon 34122 (KR)**

• **LEE, Jong Won**
**Daejeon 34122 (KR)**
• **KIM, Dong Hyun**
**Daejeon 34122 (KR)**
• **YANG, Gui Eum**
**Daejeon 34122 (KR)**
• **CHOY, Sang Hoon**
**Daejeon 34122 (KR)**
• **CHOI, Hyeon**
**Daejeon 34122 (KR)**

(74) Representative: **Plasseraud IP**
**104 Rue de Richelieu**
**CS92104**
**75080 Paris Cedex 02 (FR)**

(54) **CATHODE AND LITHIUM SECONDARY BATTERY COMPRISING SAME**

(57) A positive electrode includes a first active material layer and a second active material layer sequentially laminated on a positive electrode current collector. A conductor contained in the first active material layer is a needle-type conductor and increases the adhesive strength between the positive electrode current collector and the positive electrode active material layer by increasing the content of the needle-type conductor contained in the first active material layer compared to the second active material layer. A lithium secondary battery including the same is also provided.

**EP 4 465 387 A1**

## Description

[Technical Field]

This application claims the benefit of priority based on Korean Patent Application No. 10-2022-0166976, filed on December 02, 2022, and the entire contents of the Korean patent application are incorporated herein by reference.

The present disclosure relates to a positive electrode and a lithium secondary battery including the same.

[Background Art]

As technology development and demand for electric vehicles and Energy Storage Systems (ESSs) have increased, the demand for batteries as an energy source is rapidly increasing, and research has been conducted on batteries that can meet various needs. In particular, lithium secondary batteries, which have high energy density and excellent life and cycle characteristics, have been actively researched as a power source for such devices.

In terms of battery shape, there is a high demand for prismatic secondary batteries and pouch-type secondary batteries, which can be applied to products such as mobile phones because of the thin thickness, and in terms of materials, there is a high demand for lithium secondary batteries such as lithium-ion batteries and lithium-ion polymer batteries, which have advantages such as high energy density, discharge voltage, and output stability, etc.

Generally, such secondary batteries are configured with an electrode assembly comprising a positive electrode, a negative electrode, and a separator disposed therebetween embedded inside the battery case, with positive and negative electrode tabs welded to the two electrode tabs and sealed to be exposed to the exterior of the battery case. Such electrode tabs are electrically connected by contact with an external device, and the secondary battery supplies power to or is supplied by the external device through the electrode tabs.

Lithium cobalt oxide (LCO), lithium nickel cobalt manganese oxide (LNCMO), and lithium iron phosphate (LFP) are used as positive electrode active materials in lithium secondary batteries.

Lithium iron phosphate is low-cost because it contains iron, a resource-abundant and low-cost material. In addition, the low toxicity of lithium iron phosphate means that its use reduces environmental pollution. In addition, because lithium iron phosphate has an olivine structure, its active material structure can remain stable at high temperatures compared to lithium transition metal oxide of a layered structure. Therefore, it has the advantage of excellent high temperature stability and high temperature life characteristics of the battery.

However, compared to lithium transition metal oxides such as lithium nickel cobalt manganese oxide, lithium iron phosphate has problems such as poor lithium mobility and low electrical conductivity. Consequently, lithium iron phosphate with a small average particle diameter is used to form a short lithium movement path, the surface of lithium iron phosphate is coated with carbon to improve the electrical conductivity, and an excessive amount of conductor is used.

However, as the size of the lithium iron phosphate particles decreases, the specific surface area increases, and the lithium iron phosphate with a carbonized surface has decreased solvent wetting. As a result, the particle agglomeration of lithium iron phosphate is severely occurred, which reduces the stability of the positive electrode slurry and the coating processability, and the binder cannot be effectively mixed with the lithium iron phosphate, thereby reducing the adhesive strength between the positive electrode collector and the positive electrode active material layer in the manufactured positive electrode (hereinafter referred to as the positive electrode adhesive strength). This phenomenon can be aggravated in highly loaded positive electrodes.

When the adhesive strength of the positive electrode decreases, dissociation of the positive electrode active material layer occurs during electrode manufacture or during charge and discharge, increasing the battery resistance and reducing the capacity of the secondary battery.

As the demand for high energy density secondary batteries increases, there is a need for technologies to improve positive electrode adhesive strength in positive electrodes containing lithium iron phosphate while obtaining a loading amount of 550 mg/25cm$^2$ or more.

[Summary]

[Technical Problem]

The present disclosure aims to solve the above problems, and to provide a positive electrode with excellent adhesive strength and a lithium secondary battery prepared using the positive electrode by varying the ratio of the conductor content of a first and second active material layers to increase the adhesive strength of the positive electrode.

[Technical Solution]

The present technology provides a positive electrode. In one example, a positive electrode according to the present invention includes a positive electrode current collector; a first active material layer formed on one or both sides of the positive electrode current collector; and a second active material layer formed on the first active material layer; wherein the first and second active material layers each include an positive electrode active material, a needle type conductor, a rubber-based binder, a fluorine-based binder, and a rubber-based dispersant, wherein the rubber-based binder included in the first and second active material layers, respectively, is a hydrogenated nitrile butadiene rubber (HNBR) having a weight average molecular weight (Mw) in the range of 100 to 500 kg/mol, the rubber-based dispersant included in each of the first and second active material layers is a hydrogenated nitrile butadiene rubber (HNBR) having a weight average molecular weight (Mw) in the range of 10 to 50 kg/mol, and the content of the needle type conductor included in the first active material layer is more than the content of the conductor included in the second active material layer.

In a specific example, the needle type conductor included in the first and second active material layers, respectively, according to the present invention satisfies the following condition 1.

[Condition 1]

$$0.5 \leq E2/E1 \leq 0.9$$

E1 indicates the content (wt%) of the needle type conductor contained in the first active material layer,
E2 represents the needle type conductor content (wt%) in the second active material layer.

In another specific example, the needle type conductor of the present invention is included in the first active material layer in the range of 1.0 to 1.5 wt% and in the second active material layer in the range of 0.4 to 0.95 wt%.

In another specific example, the fluorine-based binder included in each of the first and second active material layers of the present invention satisfies the following condition 2.

[Condition 2]

$$0.5 \leq P2/P1 \leq 0.8$$

P1 indicates the fluorine-based binder content (wt%) in the first active material layer,
P2 indicates the fluorine-based binder content (wt%) in the second active material layer.

In another specific example, the fluorine-based binder of the present invention is included in the first active material layer in the range of 2.0 to 2.5 wt% and in the second active material layer in the range of 1.2 to 1.8 wt%.

In another specific example, the rubber-based binder included in the first and second active material layers satisfies the following condition 3.

[Condition 3]

$$1.0 \leq R2/R1 \leq 1.4$$

R1 indicates the rubber-based binder content (wt%) in the first active material layer,
R2 indicates the rubber-based binder content (wt%) in the second active material layer.

In another specific example, the rubber-based binder is included in the first active material layer in the range of 0.3 to 0.7 wt% and in the second active material layer in the range of 0.4 to 0.8 wt%.

In another specific example, the total content (wt%) of fluorine-based binder and rubber-based binder contained in the first and second active material layers ranges from 1.5 wt% or more.

In another example, the porosity of the positive electrode ranges from 26 to 34% volume of voids divided by the total volume (v/v).

In another example, in a vacuum dried positive electrode, the adhesive strength, as measured in an adhesive strength evaluation of separating the positive electrode active material layer comprising the first and second active material layers from the positive electrode collector at 90°, is 45 gf/20 mm or more.

In a specific example, the positive electrode active material comprises lithium iron phosphate, wherein the lithium iron phosphate is the compound represented by the following formula 1.

[Formula 1]. $Li_{1+a}Fe_{1-x}M_x(PO_{4-b})X_b$

In Formula 1, M comprises one or more elements selected from the group consisting of Al, Mg, Ni, Co, Mn, Ti, Ga, Cu, V, Nb, Zr, Ce, In, Zn, and Y; X comprises one or more elements selected from the group consisting of F, S, and N; and a, b, and x are $-0.5 \leq a \leq 0.5$, $0 \leq b \leq 0.1$, and $0 \leq x \leq 0.5$, respectively.

In another specific example, the needle type conductor material is carbon nanotubes.

The present disclosure also provides a lithium secondary battery manufactured using the positive electrode described above.

[Advantageous Effects]

The positive electrode according to an aspect of the present invention can improve the energy density by reducing the content of the binder and increasing the content of the positive electrode active material, as the adhesive strength of the positive electrode is improved by differing the content of the needle type conductor included in the first active material layer and the second active material layer.

[Detailed Description]

The present invention may be modified into various forms and may have a variety of embodiments, and, therefore, specific embodiments will be described in detail below. However, the embodiments are not to be taken in a sense which limits the present invention to the specific embodiments and should be construed to include all modifications, equivalents, or substituents falling within the spirit and technical scope of the present invention.

In the present invention, the terms "comprising," "having," or the like are used to specify that a feature, a number, a step, an operation, a component, an element, or a combination thereof described herein exists, and they do not preclude the presence or addition of one or more other features, numbers, steps, operations, components, elements, or combinations thereof. In addition, in the present invention, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion but also a case in which still another portion is present between the portion and another portion. In addition, in the present application, as being disposed "on" may include the case of being disposed not only on an upper portion but also on a lower portion.

In this specification, D50 refers to a particle diameter in the particle diameter distribution curve that corresponds to 50% of the volume accumulation. The D50 can be measured, for example, using a laser diffraction method. The laser diffraction method is generally capable of measuring particle diameters from the submicron region to a few millimeters and provides highly reproducible and highly resolvable results.

In this specification, "specific surface area" is measured by the BET method, which can be calculated from the amount of nitrogen gas adsorption amount at a liquid nitrogen temperature (77 K) using the BELSORP-mino II of BEL Japan Corporation.

In this specification, "Mw" refers to a conversion value for a standard polystyrene measured by Gel Permeation Chromatography (GPC). Specifically, the Mw is a conversion of the value measured by GPC under the following conditions, and standard polystyrene from the Agilent system was used for producing the calibration curve.

<Measurement Conditions>

Measuring instrument: Agilent GPC (Agulent 1200 series, USA)

Column: Two PL Mixed B connected

Column temperature: 40°C

Eluent: Tetrahydrofuran

Flow rate: 1.0 ml/min

Concentration: ~ 1 mg/ml (100 $\mu\ell$ injection)

In the present specification, positive electrode adhesive strength may be measured in the following manner. Prepare a positive electrode cut to a length of 150 mm and a width of 20 mm, and place the positive electrode active material layer against a slide glass of length 75 mm and width 25 mm, and attach the positive electrode to the slide glass with double-sided tape in the longitudinal direction, i.e., so that the slide glass is attached to an area corresponding to half of the length direction of the positive electrode. Then, the evaluation sample is prepared by rubbing the roller 10 times so that the double-sided tape is uniformly attached. Next, fix the slide glass part of the evaluation sample to the sample stage of the Universal Testing Machine (UTM) (LS5, AMETEK) and connect the positive electrode half without the slide glass to the load cell of the UTM machine. Measure the load applied to the load cell by moving it 50 mm at a speed of 100 mm/min and applying a force 90°. Obtain the average value of the measured loads in the 20 mm to 40 mm range of the travelling section. Repeat the test five times and evaluate the average value as the positive electrode adhesive strength (gf/20 mm) of each sample.

An embodiment of the present invention provides a positive electrode and a lithium secondary battery prepared using the same.

In general, lithium iron phosphate, which is used as a positive electrode active material, has poor lithium mobility and low electrical conductivity compared to lithium transition metal oxides such as lithium nickel cobalt manganese oxide, so lithium iron phosphate with a small average particle diameter is mainly used as a positive electrode active material. However, the small size of the lithium iron phosphate particles increases the specific surface area, which leads to high particle agglomeration, which prevents effective mixing of the lithium iron phosphate with the binder, resulting in reduced positive electrode adhesive strength. As a result, dissociation of the positive electrode active material layer occurs during electrode manufacturing or charge and discharge, which increases the battery resistance and reduces the capacity of the secondary battery.

Accordingly, an embodiment of the present invention provides a positive electrode having a first active material layer formed on a positive electrode current collector and a second active material layer formed on the first active material layer, wherein the rubber-based binder included in the first and second active material layers is a hydrogenated nitrile butadiene rubber (HNBR) having a weight average molecular weight (Mw) in the range of 100 to 500 kg/mol, the rubber-based dispersant is a hydrogenated nitrile butadiene rubber (HNBR) having a weight average molecular weight (Mw) in the range of 10 to 50 kg/mol, and the content of the needle type conductor in the first active material layer is greater than the content of the conductor in the second active material layer. In this case, the dispersibility of the lithium iron phosphate particles is improved to inhibit their agglomeration, and the migration of the binder is inhibited, which greatly improves the adhesive strength of the positive electrode.

Hereinafter, a positive electrode according to an embodiment of the present invention and a lithium secondary battery prepared using the same will be described in detail.

**Positive electrode**

A positive electrode, according to one example of the present invention, comprises: a positive electrode current collector; a first active material layer formed on one or both sides of the positive electrode current collector; and a second active material layer formed on the first active material layer; wherein the first and second active material layers each comprise an positive electrode active material, a needle type conductor, a rubber-based binder, a fluorine-based binder, and a rubber-based dispersant, wherein the rubber-based binder included in the first and second active material layers is a hydrogenated nitrile butadiene rubber (HNBR) having a weight average molecular weight (Mw) in the range of 100 to 500 kg/mol, the rubber-based dispersant included in each of the first and second active material layers is a hydrogenated nitrile butadiene rubber (HNBR) having a weight average molecular weight (Mw) in the range of 10 to 50 kg/mol, wherein the content of the needle type conductor included in the first active material layer is greater than the content of the conductor included in the second active material layer.

The positive electrode according to one embodiment of the present invention is a structure in which the positive electrode active material layer is in direct contact with the positive electrode current collector because of the excellent interface adhesive strength between the positive electrode current collector and the positive electrode active material layer (including both the first active material layer and the second active material layer), and may not include a separate layer for improving the adhesive strength between the positive electrode current collector and the positive electrode active material layer. In other words, the positive electrode according to one embodiment of the present invention may exhibit excellent interface adhesive strength between the positive electrode current collector and the positive electrode active material layer without the inclusion of a separate layer, such as a bonding layer or adhesive layer or a bonding layer or a primer coating layer, etc. which may be interposed to improve the adhesive strength.

A positive electrode according to one embodiment of the present invention comprises a positive electrode active material layer comprising a first active material layer and a second active material layer. Specifically, a positive electrode according to an embodiment of the present invention includes a positive electrode current collector, a first active material layer formed on one or both sides of the positive electrode current collector, and a second active material layer formed on the first active material layer.

When the structure of the positive electrode active material layer is formed as a single layer, during the drying process after application of the positive electrode slurry to the positive electrode current collector, some of the binder in the area adjacent to the current collector may move towards the electrode surface with the evaporation of the solvent. As a result, the binder content of the parts where the positive electrode active material layer contacts the positive electrode collector after drying may decrease compared to before drying, and the adhesive strength (adhesive strength between the positive electrode active material layer and the positive electrode current collector) of the positive electrode finally obtained may also decrease.

In a battery with such a low adhesive strength positive electrode, the positive electrode current collector and the positive electrode active material layer may dissociate during the charging and discharging process, and a swelling phenomenon may occur in which the thickness of the positive electrode and the battery containing the positive electrode gradually becomes thicker, and the electrochemical properties such as the capacity and efficiency of the battery gradually decline.

Therefore, an embodiment of the present invention is designed to solve the problem of a single-layer positive electrode by forming a two-layer structure of the positive electrode active material layer and increasing the binder content of the active material slurry for forming the bottom layer (the first active material layer) more than the active material slurry for forming the top layer (the second active material layer).

Specifically, the first active material layer and the second active material layer each independently include a positive active material, a binder, a conductor, and a dispersant, wherein the content of the binder in the first active material layer is designed to be greater than the content of the binder in the second active material layer.

Meanwhile, the positive electrode current collector may be, but is not limited to, any conductive material that does not cause chemical changes in the battery. For example, stainless steel, aluminum, nickel, titanium, baked carbon, or a surface treatment of aluminum or stainless steel with carbon, nickel, titanium, silver, or the like may be used as the positive electrode current collector.

The positive electrode current collector can have a thickness of 3 to 500 $\mu$m and can also have fine unevenness on the surface of the positive electrode current collector to increase the adhesive strength to the positive active material layer. For example, it can be used in various forms, such as films, sheets, foils, nets, porous materials, foams, nonwoven fabrics, etc.

The first and second active material layers may each include a positive electrode active material, a needle type conductor, a rubber-based binder, a fluorine-based binder, and a rubber-based dispersant.

Hereinafter, each component included in the positive electrode active material layer is described in detail.

**(1) Positive electrode active material**

An embodiment of the present invention includes lithium iron phosphate as a positive electrode active material. Since lithium iron phosphate has an olivine structure, the active material structure remains stable at a high temperature compared to lithium transition metal oxide of a layered structure. As a result, when lithium iron phosphate is used as a positive electrode active material, the high temperature stability and high temperature life characteristics of the positive electrode can be significantly improved, thereby reducing the risk of ignition of a lithium secondary battery including the positive electrode.

The lithium iron phosphate may be a compound of the following formula 1.

[Formula 1]  $\qquad$ $Li_{1+a}Fe_{1-x}M_x(PO_{4-b})X_b$

In Formula 1, M contains one or more elements selected from the group consisting of Al, Mg, Ni, Co, Mn, Ti, Ga, Cu, V, Nb, Zr, Ce, In, Zn, and Y; X contains one or more elements selected from the group consisting of F, S, and N; and a, b, and x are $-0.5 \leq a \leq 0.5$, $0 \leq b \leq 0.1$, and $0 \leq x \leq 0.5$, respectively.

For example, the lithium iron phosphate may be $LiFePO_4$.

With respect to an embodiment of the present invention, the term "monolithic structure" refers to a structure in which the particles exist as independent phases that are not mutually agglomerated by morphology. In contrast to such a monolithic structure, a particle structure is a structure in which smaller sized particles ("primary particles") are physically and/or chemically agglomerated to form relatively larger sized particles ("secondary particles").

When the lithium iron phosphate has a monolithic structure consisting of primary particles, it is less likely that the lithium iron phosphate particles will break during the rolling process compared to the secondary particles, and therefore, the capacity reduction due to the delamination of the broken particles is less, which is desirable. In addition, if the lithium iron phosphate is a monolithic primary particle, the migration of the binder can be alleviated during the drying process of the positive electrode slurry, which may also be advantageous in terms of interface adhesive strength between the positive electrode collector and the positive electrode active material layer.

Lithium iron phosphate can include a carbon coating layer on the surface. When a carbon coating layer is formed on the surface of lithium iron phosphate, electrical conductivity can be improved, which can improve the resistance characteristics of the positive electrode.

The carbon coating layer may be formed using at least one source material selected from the group consisting of glucose, sucrose, lactose, starch, oligosaccharides, polyoligosaccharides, fructose, cellulose, polymers of furfuryl alcohol, block copolymers of ethylene and ethylene oxide, vinyl-based resins, cellulose-based resins, phenolic resins, pitch-based resins, and tar-based resins. In particular, the carbon coating layer may be formed by mixing the raw material with the lithium iron phosphate and then subjected to a heat treatment.

The average particle diameter D50 of the lithium iron phosphate may be from 0.8 to 20.0 $\mu$m, more particularly from 0.9 to 10.0 $\mu$m, and more particularly from 0.9 to 3.0 $\mu$m. When the average particle diameter D50 of the positive electrode active material satisfies the above range, the mobility of the lithium in the lithium iron phosphate is improved, which may improve the charge and discharge characteristics of the battery.

The BET specific surface area of lithium iron phosphate may be from 5 to 20 m$^2$/g, more particularly from 7 to 18 m$^2$/g, more particularly from 9 to 16 m$^2$/g. The above ranges correspond to lower values compared to conventional lithium iron phosphate. When the range is satisfied, the agglomeration of the lithium iron phosphate can be effectively suppressed even in a positive electrode slurry composition having a relatively low dispersant content.

The lithium iron phosphate of an embodiment of the present invention is characterized in that it is included in the first and second active material layers at different contents. In a specific example, the lithium iron phosphate may be included in the range of 95.0 to 96.3 wt%, based on the total solids of the positive electrode slurry composition comprising the first active material layer. It may also be included in an amount ranging from 96.5 to 97.5 wt%, based on the total solid of the positive electrode slurry composition comprising the second active material layer. Preferably, it may be included in the range of 95.5 to 96.0 wt% based on the total solids of the positive electrode slurry composition comprising the first active material layer, and may be included in the range of 96.7 to 97.0 wt% based on the total solid of the positive electrode slurry composition comprising the second active material layer. When the content of lithium iron phosphate satisfies the above range, the battery capacity of the positive electrode can be improved by ensuring sufficient positive electrode energy density.

### (2) Conductor

The conductor of an embodiment of the present invention is a needle type conductor. By needle type is meant a particle shape, such as a needle-like particle, having an aspect ratio (length/diameter value) in the range of 50 to 650, more specifically 60 to 300 or 100 to 300.

The needle type conductor have a higher electrical conductivity than point type conductors, and as it is distributed in a form that wraps around the surface of the active material between the active materials in the active material layer, it is advantageous for the formation of a conductive network, which can reduce the conductor content. In addition, the pores, which are empty spaces between the active materials, are not blocked, which is advantageous for pore development, facilitating the diffusion of lithium ions and thus reducing diffusion resistance.

The needle type conductor may be a carbon nanotube (CNT), a vapor-grown carbon fiber (VGCF), a carbon nanofiber (CNF), or a mixture of two or more thereof, preferably a carbon nanotube. The conductive network of carbon nanotubes is preferred as a conductor included in the positive electrode of an embodiment of the present invention because it can mitigate the migration of the binder during the drying process of the positive electrode slurry.

An embodiment of the present invention is characterized in that the content of the needle type conductor contained in the first active material layer is greater than the content of the conductor contained in the second active material layer.

When the structure of the positive electrode active material layer is formed as a single layer as described above, during the drying process after application of the positive electrode slurry, with evaporation of the solvent, some of the binder in the area adjacent to the positive electrode current collector may move towards the electrode surface. As a result, the binder content of the areas adjacent to the positive electrode current collector may decrease after drying compared to before drying after the application of the active material slurry, resulting in a decrease in the adhesive strength of the positive electrode finally obtained.

In a battery with such a low adhesive strength positive electrode, dissociation of the positive electrode current collector and the positive electrode active material layer may occur during the charging and discharging process, a swelling phenomenon may occur in which the thickness of the positive electrode and the battery containing the positive electrode gradually becomes thicker, and electrochemical properties such as capacity and efficiency of the battery may gradually decline.

The positive electrode of an embodiment of the present invention is configured in a two-layer structure, with a higher content of needle type conductor in the positive electrode slurry forming the lower layer, the first positive electrode active material layer, than in the positive electrode slurry forming the top layer, the second positive electrode active material layer, in order to solve the problem of a single-layer structure. In this configuration, the adhesive strength between the positive electrode current collector and the positive electrode active material layer (including the first active material layer and the second active material layer) is increased compared to the configuration in which the needle type conductor content of the positive electrode slurry forming the second active material layer is higher than that of the positive electrode slurry forming the first active material layer. This is due to the mitigation of binder migration by the conductive network structure of the needle type conductor, especially carbon nanofibers, during the electrode drying process.

Furthermore, a comparison of the thickness change that occurs upon charging and discharging between a positive electrode comprising a higher content of the needle type conductor of the positive electrode slurry forming the bottom layer, the first active material layer, than the positive electrode slurry forming the top layer, the second active material layer, and a positive electrode comprising a higher content of the needle type conductor of the positive electrode slurry forming the top layer, the second active material layer, than the positive electrode slurry forming the bottom layer, the first active material layer, shows that the thickness change is less in the former case. This is due to the relatively higher adhesive strength between the positive electrode current collector and the positive electrode active material layer (including the first active material layer and the second active material layer) in the former case than in the latter case, which prevents the electrode from dissociation and suppresses the swelling phenomenon.

The needle type conductor of an embodiment of the present invention is characterized in that the first and second active material layers are included in different contents. In a specific example, the needle type conductor included in the first and second active material layers may be configured to satisfy the following condition 1.

<div align="center">

## [Condition 1]

$$0.5 \leq E2/E1 \leq 0.9$$

</div>

E1 indicates the needle type conductor content (wt%) in the first active material layer,

E2 represents the needle type conductor content (wt%) in the second active material layer.

More specifically, the needle type conductor may comprise in the range of 1.0 to 1.5 wt% in the first active material layer and in the range of 0.4 to 0.95 wt% in the second active material layer, and preferably the needle type conductor may comprise in the range of 1.1 to 1.4 wt% in the first active material layer and in the range of 0.6 to 0.90 wt% in the second active material layer. When the content of the conductor in the first and second active material layers satisfies the above range, the migration of the binder by the conductive network structure can be mitigated to increase the adhesive strength between the positive electrode current collector and the positive electrode active material layer (including the first active material layer and the second active material layer), and the electrical conductivity of the positive electrode can be improved by obtaining a positive electrode conductive network.

**(3) Binder**

The binder of an embodiment of the present invention includes both a fluorine-based binder and a rubber-based binder. The fluorine-based binder includes a PVDF-based polymer comprising vinylidene fluoride (VDF) as a monomer. Specific examples of said PVDF-based polymers include PVDF homopolymer, PVDF-HFP (Poly(vinylidene fluoride-co-hexafluoropropylene)), PVDF-CTFE (Poly(vinylidene fluoride-co-chlorotrifluoroethylene)), PVDF-TFE (Poly(vinylidene tetrafluoroethylene)), PVDF-TrFE (Poly(vinylidene trifluoroethylene)), and PVDF-TrFE (Poly(vinylidene trifluoroethylene)), etc.

The fluorine-based binder, together with the rubber-based binder, provides adhesive strength between the positive electrode active material and the conductor, and adhesive strength between the current collector and the positive electrode active material layer.

The weight average molecular weight (Mw) of the fluorine-based binder according to an embodiment of the present invention is from 800 kg/mol to 1,500 kg/mol, preferably from 900 kg/mol to 1,400 kg/mol, more preferably from 950 kg/mol to 1,200 kg/mol. If the weight average molecular weight of the fluorine-based binder is less than the above numerical range, the adhesive strength enhancement effect may not be sufficient, and conversely, if it exceeds the above numerical range, the viscosity of the positive electrode slurry at the same solid content may increase and the coating stability may decrease, which is undesirable.

Further, the fluorine-based binder may be included in the first active material layer in an amount ranging from 2.0 to 2.5 wt% and in the second active material layer in an amount ranging from 1.2 to 1.8 wt%, preferably in an amount ranging from 2.1 to 2.4 wt% in the first active material layer and in an amount ranging from 1.3 to 1.6 wt% in the second active material layer.

Meanwhile, the rubber-based binder improves the flexibility of the positive electrode, allowing for increased loading amount of the positive electrode and excellent rolling performance. It also contributes to improved adhesive strength, as the improved flexibility allows the positive electrode to retain adhesive strength of the positive electrode in the event of physical impact outside of the positive electrode.

The rubber-based binder of an embodiment of the present invention may be a hydrogenated nitrile butadiene rubber (HNBR). Hydrogenated nitrile butadiene rubber (HNBR) means that the double bonds originally contained in the nitrile butadiene rubber (NBR) have become single bonds by hydrogenation reaction of the nitrile butadiene rubber (NBR).

Specifically, the rubber-based binder included in the first and second active material layers is a hydrogenated nitrile butadiene rubber (HNBR) having a weight average molecular weight (Mw) in the range of 100 to 500 kg/mol. When the weight average molecular weight (Mw) of the hydrogenated nitrile butadiene rubber (HNBR) is in the above range, the adhesive strength and flexibility of the first and second active material layers can be improved, so that the rolling density of the positive electrode can be increased, and as the rolling density increases, the positive electrode resistance can be reduced, and the adhesive strength between the positive electrode collector and the positive electrode active material layer can be increased.

Meanwhile, the rubber-based binder included in the first and second active material layers may be configured to satisfy condition 3 below.

$$[Condition\ 3]$$

$$1.0 \leq R2/R1 \leq 1.4$$

R1 indicates the rubber-based binder content (wt%) in the first active material layer,
R2 indicates the rubber-based binder content (wt%) in the second active material layer.

Specifically, the rubber-based binder may be included in the first active material layer in the range of 0.3 to 0.7 wt% and in the second active material layer in the range of 0.4 to 0.8 wt%. Preferably, it may be included in the first active material layer in an amount ranging from 0.4 to 0.6 wt% and in the second active material layer in an amount ranging from 0.5 to 0.7 wt%.

Meanwhile, the total content of the fluorine-based binder and the rubber-based binder may be configured to be greater in the first active material layer than in the second active material layer. Specifically, the positive electrode is characterized in that the structure of the positive electrode active material layer is a two-layer structure comprising a first active material layer and a second active material layer, such that the binder content of the slurry forming the first active material layer is higher than that of the second active material layer, which is the top layer.

In addition, the positive electrode according to one embodiment of the present invention may have a total content (wt%) of fluorine-based binder and rubber-based binder in the first and second active material layers in a range of 1.5 wt% or more. If the total content of the binders (including the fluorine-based binder and the rubber-based binder) is less than 1.5 wt%, the adhesive strength between the positive electrode active material layers (including the first and second active material layers) and the positive electrode current collector is reduced.

If the structure of the positive electrode active material layer is a monolayer, some of the binder in the area adjacent to the current collector may migrate towards the electrode surface with the evaporation of the solvent during the drying process. As a result, the binder content of the areas adjacent to the current collector may decrease after drying compared to before drying after application of the positive electrode slurry, resulting in a decrease in the adhesive strength (the adhesive strength between the active material layer and the current collector) of the final obtained positive electrode.

In a battery applying a positive electrode with such a low adhesive strength, separation of the positive electrode current collector and the positive electrode active material layer may occur during the charging and discharging process, a swelling phenomenon may occur in which the thickness of the positive electrode and the battery comprising the positive electrode gradually increases, and electrochemical properties such as capacity and efficiency of the battery may gradually decrease. Therefore, an embodiment of the present invention is characterized in that the structure of the positive electrode active material layer is a two-layer structure, and the binder content of the bottom layer, the first active material layer, is higher than the top layer, the second active material layer, in order to solve the problem of deterioration of the adhesive strength of the positive electrode active material layer.

More specifically, the total content of binders (including fluorine-based binders and rubber-based binders) included in the first active material layer may be in the range of 1.0 to 1.7 times the total content of binders included in the second active material layer, and preferably in the range of 1.2 to 1.5 times. When the total content ratio of the binder is in the above range, even if some of the binder in the bottom layer, the first active material layer, migrates toward the electrode surface during the drying process, the first active material layer of the positive electrode that is finally obtained after drying is left with excessive binder compared to the positive electrode of the single-layer structure, thereby preventing the deterioration of the adhesive strength of the positive electrode that occurs during the drying process. Therefore, in a secondary battery with a positive electrode having improved adhesive strength, dissociation of the positive electrode current collector and the positive electrode active material layer during the charging and discharging process, swelling of the positive electrode and the battery comprising the positive electrode, and decline in electrochemical properties during the charging and discharging process of the battery can be suppressed.

(4) Dispersant

Further, the first and second active material layers of an embodiment of the present invention include a dispersant. The dispersant is used to increase the dispersibility of the components of the active material layer. In particular, it increases the dispersibility of the conductor in the active material. Meanwhile, the dispersant can also act as a thickener.

The dispersant of an embodiment of the present invention may be a hydrogenated nitrile butadiene rubber (HNBR). As described above, the hydrogenated nitrile butadiene rubber (HNBR) may have the effect of improving the adhesive strength and flexibility of the first and second active material layers, increasing the rolling density to lower the positive electrode resistance, and increasing the adhesive strength between the positive electrode current collector and the positive electrode active material layers (including the first and second active material layers).

The dispersant may be included in the first active material layer in a range of 0.2 to 0.5 wt% and may be included in the second active material layer in a range of 0.1 to 0.4 wt%, preferably. It may be included in the first active material layer in the range of 0.3 to 0.4 wt% and in the second active material layer in the range of 0.2 to 0.3 wt%. Since the binders (including fluorine-based binders and rubber-based binders) included in the first active material layer have a higher amount than the binders (including fluorine-based binders and rubber-based binders) included in the second active material layer, a higher amount of binders is added to the first active material layer than to the second active material layer in consideration thereof.

Meanwhile, the hydrogenated nitrile butadiene rubber (HNBR) comprising the dispersant has the same chemical structure as the hydrogenated nitrile butadiene rubber (HNBR) comprising the binder, but has a different weight average molecular weight (Mw).

In a specific example, the rubber-based binder included in each of the first and second active material layers may be a hydrogenated nitrile butadiene rubber (HNBR) having a weight average molecular weight (Mw) in the range of 100 to 500 kg/mol, and the rubber-based dispersant included in each of the first and second active material layers may be a hydrogenated nitrile butadiene rubber (HNBR) having a weight average molecular weight (Mw) in the range of 10 to 50 kg/mol. The smaller the Mw of the hydrogenated nitrile butadiene rubber (HNBR), the smaller the particle size may be. By configuring the weight average molecular weight (Mw) of the hydrogenated nitrile butadiene rubber (HNBR) used as the dispersant to be smaller than the weight average molecular weight (Mw) of the hydrogenated nitrile butadiene rubber (HNBR) used as the binder, the dispersibility of the fluorinated and rubber-based binders can be improved. In addition, even if the particle size of the lithium iron phosphate-based positive electrode active material is reduced, the dispersibility problem can be solved by preventing agglomeration between the positive electrode active material particles.

According to one embodiment of the present invention, the positive electrode may have excellent positive electrode adhesive strength and flexibility. Specifically, in the positive electrode, the positive electrode active material layer may have improved adhesive strength to the positive electrode current collector. As a result, a high-loading positive electrode can be manufactured, the cell resistance of the secondary battery can be reduced by preventing dissociation of the positive electrode, the capacity and output characteristics of the battery can be improved, and defects in the manufacturing process can be reduced.

According to one embodiment of the present invention, the positive electrode may have a porosity in the range of 26 to 34% (v/v). The porosity of the positive electrode active material such as lithium iron phosphate in the above range enables free movement between the electrodes, thereby reducing the cell resistance of the secondary battery, and may improve the capacity and output characteristics of the battery.

Further, according to one embodiment of the present invention, in a vacuum dried positive electrode, the adhesive strength measured when evaluating the adhesive strength of peeling the first and second active material layers from the positive electrode current collector at 90° is at least 45 gf/20 mm, more particularly at least 50 gf/20 mm, or in the range of 45 to 60 gf/20 mm.

## Lithium Secondary Battery

The following describes a lithium secondary battery according to an embodiment of the present invention.

A lithium secondary battery according to one embodiment of the present invention may include a positive electrode, a negative electrode, a separator interposed between the positive electrode and the negative electrode, and an electrolyte.

In a lithium secondary battery, the positive electrode is as previously described. For example, an positive electrode according to one embodiment of the present invention includes an positive electrode current collector; a first active material layer formed on one or both sides of the positive electrode current collector; and a second active material layer formed on the first active material layer; wherein the first and second active material layers each comprise a positive electrode active material, a needle-type conductor, a rubber-based binder, a fluorine-based binder, and a rubber-based dispersant, wherein the rubber-based binder included in the first and second active material layers is a hydrogenated nitrile butadiene rubber (HNBR) having a weight average molecular weight (Mw) in the range of 100 to 500 kg/mol, the rubber-based dispersant included in each of the first and second active material layers is a hydrogenated nitrile butadiene rubber (HNBR) having a weight average molecular weight (Mw) in the range of 10 to 50 kg/mol, and is a positive electrode characterized in that the content of the needle-type conductor included in the first active material layer is greater than the content of the conductor included in the second active material layer.

The negative electrode may be prepared, for example, by preparing a composition for forming a negative electrode comprising a negative electrode active material, a negative electrode binder, and a negative electrode conductor, and then applying the composition on a negative electrode current collector.

The negative electrode active material is not particularly limited, and generally any compound capable of reversible intercalation and deintercalation of lithium may be used. Specific examples include carbonaceous materials such as artificial graphite, natural graphite, graphitized carbon fiber, amorphous carbon, and highly crystalline carbon; metallic compounds that can be alloyed with lithium, such as Si, Al, Sn, Pb, Zn, Bi, In, Mg, Ga, Cd, Si alloys, Sn alloys, or Al alloys; or composites comprising metallic compounds and carbonaceous materials. Low crystallinity carbons include soft carbon and hard carbon, and high crystallinity carbons include natural graphite, kish graphite, and pyrolytic carbon, mesophase pitch-based carbon fiber, meso-carbon microbeads, mesophase pitches, and high temperature calcined carbons such as petroleum or coal tar pitch derived cokes. One of these materials alone or a mixture of two or more of these materials may be used, and metallic lithium thin films may also be used as the negative electrode active material.

The negative electrode conductor is used to impart conductivity to the electrode and can be used without any particular restriction as long as it is electrically conductive without causing chemical changes in the battery being constructed. Specific examples include graphite, such as natural or artificial graphite; carbon-based materials, such as carbon black, acetylene black, ketchen black, channel black, furnace black, lamp black, thermal black, carbon fiber, carbon nanotubes, etc.; metal powders or metal fibers, such as copper, nickel, aluminum, silver, etc; conductive whiskers, such as zinc oxide or potassium titanate; conductive metal oxides, such as titanium oxide; or conductive polymers, such as polyphenylene derivatives, any one of which may be used alone or a mixture of two or more of among them. The negative electrode conductor may typically comprise from 1 to 30 wt%, more particularly from 1 to 20 wt%, more particularly from 1 to 10 wt%, based on the total weight of the negative electrode active material layer.

The negative electrode binder serves to improve the adhesive strength between the negative electrode active material particles and the adhesive strength of the negative electrode active material to the negative electrode current collector. Specific examples include polyvinylidene difluoride (PVDF), vinylidene difluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorinated rubber, or various copolymers thereof, and one or more of these alone or a mixture of two or more of these may be used. The negative electrode binder may comprise from 1 to 30 wt%, more particularly from 1 to 20 wt%, more particularly from 1 to 10 wt%, based on the total weight of the negative active material layer.

Meanwhile, the negative electrode current collector is not particularly limited as long as it has a high conductivity without causing chemical changes in the battery, and for example, copper, stainless steel, aluminum, nickel, titanium, calcined carbon, surface treatment of copper or stainless steel with carbon, nickel, titanium, silver, etc. on the surface of copper or stainless steel, aluminum-cadmium alloy, etc. may be used.

In addition, the negative electrode current collector may typically have a thickness of 3 to 500 $\mu$m, and, as with the positive electrode current collector, fine unevenness may be formed on the surface of the negative electrode current collector to strengthen the binding force of the negative electrode active material. For example, it can be used in various forms, such as films, sheets, foils, nets, porous materials, foams, nonwoven fabrics, etc.

Meanwhile, in a lithium secondary battery, the separator can be used without any particular restriction if it is conventionally used as a separator in a lithium secondary battery, and it is particularly desirable that it has a low resistance to ion migration of the electrolyte and an excellent electrolyte wetting ability. Specifically, porous polymeric films, for example, porous polymeric films made of polyolefin-based polymers such as ethylene homopolymers, propylene homopolymers, ethylene/butene copolymers, ethylene/hexene copolymers, and ethylene/methacrylate copolymers, or laminated structures of two or more layers thereof, may be used. Also, conventional porous nonwoven fabrics may be used, for example, nonwoven fabrics made of high melting point glass fibers, polyethylene terephthalate fibers, and the like. Furthermore, the separator may be a porous thin film having a pore diameter of 0.01 to 10 $\mu$m and a thickness of 5 to 300 $\mu$m.

Meanwhile, in the lithium secondary battery, the electrolyte may include, but is not particularly limited to, organic solvents and lithium salts conventionally used in electrolytes.

The organic solvent may be used without limitation as long as it can serve as a medium through which the ions involved in the electrochemical reaction of the battery can migrate. Specifically, the organic solvents include ester-based solvents such as methyl acetate, ethyl acetate, $\gamma$-butyrolactone, $\varepsilon$-caprolactone, and the like; ether-based solvents, such as dibutyl ether or tetrahydrofuran; ketone-based solvents, such as cyclohexanone; aromatic hydrocarbon solvents, such as benzene and fluorobenzene; carbonate solvents, such as dimethyl carbonate (DMC), diethyl carbonate (DEC), methyl ethyl carbonate (MEC), ethyl methyl carbonate (EMC), ethylene carbonate (EC), propylene carbonate (PC), etc.

Among these, carbonate-based solvents are preferred, and mixtures of annular carbonates (e.g., ethylene carbonate or propylene carbonate), which have high ionic conductivity and high permittivity to enhance the charge and discharge performance of the battery, and needle-type carbonate-based compounds (e.g., ethyl methyl carbonate, dimethyl carbonate, or diethyl carbonate, etc.) with low viscosity are more preferred.

The lithium salt may be any compound capable of providing lithium ions for use in a lithium secondary battery, without limitation. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$ may be used. Preferably, the lithium salt is included in the electrolyte at a concentration of about 0.6 mol% to 2 mol%.

In addition to the above components of the electrolyte, the electrolyte may also contain, for the purpose of improving the life characteristics of the cell, inhibiting the decrease in battery capacity, improving the discharge capacity of the battery, etc, for example, one or more kind of additives among pyridine, triethylphosphite, triethanolamine, cyclic ether, ethylenediamine, n-glyme, hexamethylphosphoric acid triamide, nitrobenzene derivatives, sulfur, quinone imine dyes, N-substituted oxazolidinones, N,N-substituted imidazolidines, ethylene glycol dialkyl ether, ammonium salts, pyrroles, 2-methoxyethanol, or aluminum trichloride. The additive may be included in an amount of 0.1 to 5 wt% based on the total weight of the electrolyte.

The lithium secondary battery of an embodiment of the present invention can be prepared by placing a separator between the positive and negative electrodes to form an electrode assembly, wherein the electrode assembly is placed in a cylindrical battery case or a prismatic battery case and then electrolyte is injected. Alternatively, it may be prepared by laminating the electrode assembly, impregnating it with an electrolyte, and sealing the resulting product in a battery case.

In manufacturing the lithium secondary battery of an embodiment of the present invention, the electrode assembly may be dried to remove one or more organic solvents selected from the group consisting of N-methyl-2-pyrrolidone (NMP), acetone, ethanol, propylene carbonate, ethyl methyl carbonate, ethylene carbonate, and dimethyl carbonate used in the manufacture of the positive electrode. The process of drying the electrode assembly may be omitted if an electrolyte of the same composition as the organic solvent used to prepare the positive electrode is used as the electrolyte.

In contrast to the lithium secondary battery described above, the lithium secondary battery according to another embodiment of the present invention may be an all-solid-state battery.

The battery case may be any conventionally used in the art and may be of any shape depending on the intended use of the battery, for example, cylindrical, angular, pouch or coin-shaped using a can.

The lithium secondary battery according to an embodiment of the present invention exhibits excellent discharge capacity, power characteristics, and stable capacity retention, and is therefore useful in portable devices such as cell phones, notebook computers, digital cameras, and in the field of energy storage systems (ESS) and electric vehicles such as hybrid electric vehicles (HEV).

Hereinafter, the present invention will be described in more detail by embodiments. However, the following embodiments are provided to illustrate the invention and are not intended to limit the scope of the present invention.

**Example 1: Preparation of Positive Electrode**

(1) Preparation of positive electrode slurry

Lithium iron phosphate (LFP) as a positive electrode active material, carbon nanotubes (CNTs) as a conductor, a fluorine-based binder (Kynar®, HSV900), a rubber-based binder, a hydrogenated nitrile butadiene rubber (HNBR) with a weight average molecular weight (Mw) of 200 kg/mol, and as a dispersant, a hydrogenated nitrile butadiene rubber (HNBR) having a weight average molecular weight (Mw) of 20 kg/mol was mixed, and the first and second positive electrode slurries were prepared by mixing at 2500 rpm for 90 minutes using a Homo-disperse.

In the first positive electrode slurry, lithium iron phosphate, conductor, dispersant, fluorine-based binder, and rubber-based binder were present in a weight ratio of 95.74 : 1.2 : 0.36 : 2.2 : 0.5.

In addition, in the second positive electrode slurry, the lithium iron phosphate, conductor, dispersant, fluorine-based binder, and rubber-based binder were present in a weight ratio of 96.96 : 0.8 : 0.24 : 1.4 : 0.6.

(2) Preparation of positive electrode

After applying the first positive electrode slurry to a 20 $\mu$m thick aluminum thin film, the first positive electrode slurry was hot air dried at 130°C for 5 minutes to ensure that the solid content of the positive electrode slurry was greater than 99.0 wt%, and then rolled by roll pressing to form a first active material layer.

Then, the second positive electrode slurry was coated on the first positive electrode active material layer, hot air dried at 130°C for 5 minutes and rolled by roll pressing to form the second positive electrode active material layer, thereby preparing a positive electrode having a double layer. The total loading amount of the positive electrode was 584 mg/25cm$^2$, and the porosity was 29% (v/v).

**Example 2 to 3 and Comparative Examples 1 to 3: Preparation of positive electrode**

The positive electrodes were prepared in the same manner as in Example 1, except that the weight ratios of lithium iron phosphate, conductor, dispersant, fluorine-based binder, and rubber-based binder in the first and second positive electrode slurries were changed as shown in Table 1.

**Example 4 to Example 6 and Comparative Examples 4 to 7: Preparation of positive electrode**

The positive electrodes were prepared in the same manner as in Example 1, except that the weight average molecular weight of the rubber-based binder and dispersant in the first and second positive electrode slurries was changed as shown in Table 1.

**Experiment Example 1: Viscosity measurement of positive electrode slurry**

The viscosity of the positive electrode slurry prepared in each of Examples 1 to 6 and Comparative Examples 1 to 7 was measured, and the results are shown in Table 2.

Specifically, the positive electrode slurry prepared in each of Examples 1 to 6 and Comparative Examples 1 to 7 was cooled for 1 hour at room temperature and 1% relative humidity, and then the viscosity of the positive electrode slurry composition was measured using a viscometer (Brookfield) at a shear rate of 2.5 /s at 25°C. The viscosity measurements were performed within 2 hours after preparation of the positive electrode slurry composition, including the cooling time.

Experiment Example 2: Testing the adhesive strength of positive electrode

The positive electrode prepared in each of Examples 1 to 6 and Comparative Examples 1 to 7 was vacuum dried at a temperature of 130°C for 2 hours, and the adhesive strength between the positive electrode active material layer and the positive electrode current collector was measured, and the results are shown in Table 2.

Specifically, the positive electrode prepared in each of Examples 1 to 6 and Comparative Examples 1 to 7 was cut to 150 mm and 20 mm wide, and the surface of the positive electrode was attached to a slide glass having a length of 75 mm and a width of 25 mm using double-sided tape in the longitudinal direction. In other words, the slide glass was attached to an area corresponding to half of the length direction of the positive electrode. Then, the evaluation sample was prepared by rubbing the roller 10 times to make the double-sided tape adhere uniformly.

Next, the slide glass portion of the evaluation sample was fixed to the sample stage of the Universal Testing Machine (UTM) (Product name: LS5, manufacturer: LLOYD), and the half portion of the positive electrode without the slide glass attached was connected to the load cell of the UTM device. The load cell was moved at a speed of 100 mm/min, with a force of 90°, to 50 mm and the load applied to the load cell was measured. The load was averaged over a 20 mm to 40 mm section of the traveling section, repeated five times, and the average value was used to determine the positive electrode adhesive strength (gf/20 mm) of each sample.

[Table 1]

| | Total content(Second active material layer/first active material layer) | | | | | | |
|---|---|---|---|---|---|---|---|
| | lithium iron phosphate (wt%) | conductor (wt%) | dispersant (wt%) | dispersant (MW, kg/mol) | fluorine-based binder (wt%) | rubber-based binder (wt%) | rubber-based binder (MW, kg/mol) |
| Example 1 | 96.35 (96.96/95.74) | 1.0 (0.8/1.2) | 0.3 (0.24/0.36) | (20/20) | 1.8 (1.4/2.2) | 0.55 (0.6/0.5) | (200/200) |
| Example 2 | 96.35 (96.94/95.76) | 1.0 (0.85/1.15) | 0.3 (0.25/0.35) | (20/20) | | | (200/200) |
| Example 3 | 96.35 (96.58/96.12) | 1.0 (0.75/1.35) | 0.3 (0.225/0.375) | (20/20) | | | (200/200) |
| Example 4 | 96.35 (96.75/95.95) | 1.0 (0.8/1.2) | 0.3 (0.24/0.36) | (10/10) | | | (100/100) |
| Example 5 | 96.35 (96.72/95.98) | 1.0 (0.8/1.2) | 0.3 (0.24/0.36) | (20/20) | | | (300/300) |
| Example 6 | 96.35 (96.85/95.84) | 1.0 (0.8/1.2) | 0.3 (0.24/0.36) | (40/40) | | | (400/400) |
| Comparative Example 1 | 96.35 (96.44/96.26) | 1.0 (1.2/0.8) | 0.3 (0.36/0.24) | (20/20) | | | (200/200) |
| Comparative Example 2 | 96.35 (96.49/96.21) | 1.0 (1.1/0.9) | 0.3 (0.33/0.27) | (20/20) | | | (200/200) |
| Comparative Example 3 | 96.35 (96.86/95.84) | 1.0 (1.0/1.0) | 0.3 (0.3/0.3) | (20/20) | | | (200/200) |
| Comparative Example 4 | 96.35 (96.72/95.98) | 1.0 (0.8/1.2) | 0.3 (0.24/0.36) | (8/8) | | | (85/85) |
| Comparative Example 5 | 96.35 (96.56/96.14) | 1.0 (0.8/1.2) | 0.3 (0.24/0.36) | (70/70) | | | (85/85) |
| Comparative Example 6 | 96.35 (96.67/96.03) | 1.0 (0.8/1.2) | 0.3 (0.24/0.36) | (70/70) | | | (550/550) |
| Comparative Example 7 | 96.35 (96.85/95.84) | 1.0 (0.8/1.2) | 0.3 (0.24/0.36) | (8/8) | | | (550/550) |

[Table 2]

| | Second active material layer/first active material layer | | Positive electrode active material layer (including first and second active material layer ) adhesive strength(gf/20mm) |
|---|---|---|---|
| | Solid (wt%) | slurry viscosity(cps @ 2.5/s) | |
| Example 1 | 66/62 | 11,600/14,400 | 56.2 |
| Example 2 | 66/62 | 11,900/19,900 | 53.6 |
| Example 3 | 66/62 | 11,100/14,800 | 55 |
| Example 4 | 66/62 | 12,600/15,600 | 52.8 |
| Example 5 | 66/62 | 14,500/17,600 | 49.9 |
| Example 6 | 66/62 | 16,900/19,100 | 51 |
| Comparative Example 1 | 65/63 | 14,700/11,900 | 39.2 |
| Comparative Example 2 | 65/63 | 13,900/12,100 | 38.8 |

(continued)

| | Second active material layer/first active material layer | | Positive electrode active material layer (including first and second active material layer ) adhesive strength(gf/20mm) |
|---|---|---|---|
| | Solid (wt%) | slurry viscosity(cps @ 2.5/s) | |
| Comparative Example 3 | 65/63 | 13,100/12,700 | 33.8 |
| Comparative Example 4 | 66/62 | 7,500/8,200 | 40.5 |
| Comparative Example 5 | 66/62 | 14,400/16,100 | 36.4 |
| Comparative Example 6 | 66/62 | 17,500/19,200 | 33.2 |
| Comparative Example 7 | 66/62 | 8,900/9,700 | 35.7 |

The positive electrode of Example 1 has more conductor in the first active material layer than in the second active material layer. On the other hand, in Comparative Examples 1 to 3, the first active material layer contains less conductor than the second active material layer. It can be seen that the positive electrode adhesive strength of Example 1 is superior to the respective positive electrode adhesive strengths of Comparative Examples 1 to 3. In addition, it can be seen that the positive electrode of Examples 2 to 3, in which the ratio of the conductor contained in the first active material layer and the second active material layer is different from that of Example 1, still contains more conductor contained in the first active material layer than the conductor contained in the second active material layer, and has an adhesive strength better than that of each positive electrode of Comparative Examples 1 to 3, and smaller than that of Example 1, but does not show a significant difference. In other words, when the first active material layer contains more conductor than the second active material layer as in Examples 1 to 3, the positive electrode adhesive strength is better than when the first active material layer contains less conductor than the second active material layer as in Comparative Examples 1 to 3.

Specifically, assuming that E1 indicates the needle-type conductor content (wt.%) in the first active material layer and E2 indicates the needle-type conductor content (wt.%) in the second active material layer, Examples 1 to 3 satisfy the following condition 1, but Comparative Examples 1 to 3 do not satisfy the following condition 1.

[Condition 1]

$$0.5 \leq E2/E1 \leq 0.9$$

Thus, the adhesive strength between the positive electrode current collector and the positive electrode active material layer (including the first active material layer and the second active material layer) increased when the positive electrode slurry forming the bottom layer, the first active material layer, was composed of a higher content of needle-type conductive materials than the positive electrode slurry forming the second active material layer, compared to when the positive electrode slurry forming the top layer, the second active material layer, was composed of a higher content of conductor than the positive electrode slurry forming the bottom layer, the first active material layer. This is considered to be due to the improved adhesive strength between the positive electrode current collector and the positive electrode active material layers (including the first and second active material layers) due to the mitigation of the migration of the binder by the conductive network structure of the conductor, especially the needle-type conductor such as carbon nanofibers, during the electrode drying process. It is expected that a battery with a positive electrode having improved adhesive strength can increase the capacity, efficiency, and other electrochemical characteristics of the battery by preventing the dissociation of the positive electrode current collector and the positive active material layer during the charging and discharging process, thereby preventing the appearance of a swelling phenomenon in which the thickness of the positive electrode and the battery comprising the positive electrode gradually increases.

In the positive electrode of Example 1 and Examples 4 to 6, the rubber-based binder included in the first and second active material layers, respectively, is a hydrogenated nitrile butadiene rubber (HNBR) having a weight average molecular weight (Mw) in the range of 100 to 500 kg/mol, and the rubber-based dispersant included in the first and second active material layers, respectively, is a hydrogenated nitrile butadiene rubber (HNBR) having a weight average molecular weight (Mw) in the range of 10 to 50 kg/mol. In contrast, Comparative Examples 4 to 7 do not fall within the above range.

The adhesive strength of the positive electrode of Example 1 and Examples 4 to 6 was found to be significantly superior to the adhesive strength of the positive electrode of Comparative Examples 4 to 7. It is analyzed that when the hydrogenated nitrile butadiene rubber (HNBR) of the rubber-based binder and rubber-based dispersant included in the first and second active material layers, respectively, has a weight average molecular weight (Mw) in the above range, the adhesive strength is improved by preventing agglomeration between the constituent particles of the positive electrode to solve dispersibility, and by preventing migration of the binder (including the fluorine-based binder and the rubber-based binder) to the surface of the electrode during the drying process.

Thus, according to an embodiment of the present invention, a positive electrode in which the hydrogenated nitrile butadiene rubber (HNBR) of the rubber-based binder and rubber-based dispersant included in the first and second active material layers, respectively, has a weight average molecular weight (Mw) in a certain range, and the content of the needle-type conductor included in the first active material layer is greater than the content of the conductor included in the second active material layer, can have excellent adhesive strength while containing a large amount of positive electrode active material.

Experiment Example 4: Measurement of positive electrode thickness change

The thickness change of each positive electrode prepared in Example 1 and Comparative Example 1 was measured.

Specifically, for the lithium secondary batteries prepared using the positive electrodes of Example 1 and Comparative Example 1, each battery was charged with a current of 1/3C in the mode of CC/CV at 25°C until SOC 30% and 100% were reached, respectively. After disassembling the lithium secondary batteries of Example 1 and Comparative Example 1, the thickness of the positive electrode was measured and the rate of change was measured, and the values are shown in Table 3 below.

On the other hand, the negative electrode comprising the above lithium secondary battery is made of a negative electrode slurry prepared by adding a mixture of artificial graphite (GT), natural graphite (AGP8), and SiO (KSC6027D) (85:10:5, wt%) as an active material, a mixture of carbon black (Super-C65) and CNT (NCL-H5) as a conductor, SBR (BM-L302) as a binder, and CMC (Daicel 2200) as a thickener to distilled water as solvent in the ratio of 95.1:1.5:2.3:1.1. The negative electrode was prepared by coating the negative electrode slurry on one side of a copper foil with a thickness of 6 $\mu$m, drying and rolling under the same conditions as the positive electrode above.

In addition, the electrolyte was prepared by mixing ethylene carbonate (EC) and ethylmethyl carbonate (EMC) in an organic solvent in a composition of 30:70 (volume ratio), with tetravinylsilane (VS2) 0. 1 wt%, ethylene sulfate (ESa) 1 wt%, 1,3-propenesultone (PS) 0.5 wt%, lithium difluorophosphate (DFP) 1 wt%, LiBF4 0.2 wt%, and 0.7 M LiPF6 and 0.5 M LiFSI dissolved in a non-aqueous electrolyte solution was prepared. A separator (DB0905/BA1, 8 $\mu$m) was inserted between the positive and negative electrodes, and then the above electrolyte solution was injected to prepare a lithium secondary battery.

[Table 3]

| | Initial thickness of positive electrode (mm) | Positive electrode thickness change rate(%) | |
| --- | --- | --- | --- |
| | | SOC 30% | SOC 100% |
| Example 1 | 79.85 | 3.99 | 1.35 |
| Comparative Example 1 | 79.9 | 6.55 | 4.28 |

It can be seen that at the same charge state, the positive electrode of Example 1 has less thickness change during charge and discharge compared to the positive electrode of Comparative Example 1. It is analyzed that Example 1 has a higher adhesive strength than Comparative Example 1, which prevents dissociation of the electrode and thus prevents swelling. Therefore, in the positive electrode, the content of the needle-type conductor contained in the first active material layer is configured to be higher than the content of the conductor contained in the second active material layer, so that the adhesive strength of the positive electrode can be improved and the swelling phenomenon due to charge and discharge can be suppressed.

This description describes preferred embodiments of the present invention, but it will be understood by those skilled in the art or having ordinary knowledge of the art that various modifications and changes can be made to the present invention without departing from the field of thought and skill described in the claims of the patent.

Thus, the technical scope of the present invention is not limited to what is described in the detailed description of the specification, but must be defined by the claims of the patent.

**Claims**

1. A positive electrode comprising:

    a positive electrode current collector;

a first active material layer disposed on at least one side of the positive electrode current collector; and
a second active material layer disposed on the first active material layer;
wherein the first and second active material layers each include a positive electrode active material, a needle type conductor, a rubber-based binder, a fluorine-based binder, and a rubber-based dispersant,
wherein the rubber-based binder is a hydrogenated nitrile butadiene rubber (HNBR) having a weight average molecular weight (Mw) in a range of 100 to 500 kg/mol,
wherein the rubber-based dispersant is a hydrogenated nitrile butadiene rubber (HNBR) having a weight average molecular weight (Mw) in a range of 10 to 50 kg/mol, and
wherein an amount of the needle type conductor included in the first active material layer is more than an amount of the needle type conductor included in the second active material layer.

2. The positive electrode of claim 1, wherein the needle type conductor satisfies Condition 1:

[Condition 1]

$$0.5 \leq E2/E1 \leq 0.9$$

wherein E1 is the amount (wt%) of the needle type conductor contained in the first active material layer,
wherein E2 is the amount (wt%) of the needle type conductor in the second active material layer.

3. The positive electrode of claim 1, wherein the amount of needle type conductor of the first active material layer is in a range of 1.0 to 1.5 wt%, and wherein the amount of needle type conductor of the second active material layer is in a range of 0.4 to 0.95 wt%.

4. The positive electrode of claim 1, wherein the fluorine-based binder satisfies Condition 2:

[Condition 2]

$$0.5 \leq P2/P1 \leq 0.8$$

wherein P1 is an amount (wt%) of the fluorine-based binder in the first active material layer,
wherein P2 is an amount (wt%) of the fluorine-based binder in the second active material layer.

5. The positive electrode of claim 1, wherein an amount of the fluorine-based binder of the first active material layer is in a range of 2.0 to 2.5 wt%, and wherein an amount of the fluorine-based binder of the second active material layer is in a range of 1.2 to 1.8 wt%.

6. The positive electrode of claim 1, wherein the rubber-based binder satisfies Condition 3:

[Condition 3]

$$1.0 \leq R2/R1 \leq 1.4$$

wherein R1 is an amount (wt%) of the rubber-based binder in the first active material layer,
wherein R2 is an amount (wt%) of the rubber-based binder in the second active material layer.

7. The positive electrode of claim 1, wherein an amount of the rubber-based binder of the first active material layer is in a range of 0.3 to 0.7 wt%, and wherein an amount of the rubber-based binder of the second active material layer is in a range of 0.4 to 0.8 wt%.

8. The positive electrode of claim 1, wherein a total amount (wt%) of the fluorine-based binder and the rubber-based binder contained in the first and second active material layers is in a range of 1.5 wt% or more.

9. The positive electrode of claim 1, wherein a porosity of the positive electrode is in a range 26 to 34%.

10. The positive electrode of claim 1, having an adhesive strength in a range of 45 to 60 gf/20 mm,

    wherein the positive electrode is in a vacuum dried state, and
    wherein the adhesive strength is measured separating a positive electrode active material layer comprising the first and second active material layers from the positive electrode collector at 90°.

11. The positive electrode of claim 1, wherein the positive electrode active material comprises lithium iron phosphate represented by Formula 1:

    [Formula 1]     $Li_{1+a}Fe_{1-x}M_x(PO_{4-b})X_b$

    M comprises one or more elements selected from the group consisting of Al, Mg, Ni, Co, Mn, Ti, Ga, Cu, V, Nb, Zr, Ce, In, Zn, and Y,
    wherein X comprises one or more elements selected from the group consisting of F, S, and N, and
    wherein a, b, and x are $-0.5 \leq a \leq 0.5$, $0 \leq b \leq 0.1$, and $0 \leq x \leq 0.5$.

12. The positive electrode of claim 1, wherein the needle type conductor is carbon nanotubes.

13. A lithium secondary battery comprising the positive electrode among any claim 1 to 12.

## INTERNATIONAL SEARCH REPORT

| International application No. |
|---|
| **PCT/KR2023/019400** |

### A. CLASSIFICATION OF SUBJECT MATTER

**H01M 4/62**(2006.01)i; **H01M 4/136**(2010.01)i; **H01M 4/1397**(2010.01)i; **H01M 4/58**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/62(2006.01); H01M 10/052(2010.01); H01M 10/42(2006.01); H01M 10/654(2014.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(anode), 활물질(active material), 바인더 (binder), 수소화 니트릴 부타디엔 고무(Hydrogenated nitrile butadiene rubber), 분산제(Dispersing agent), 리튬 이차전지 (Lithium secondary battery)

### C. DOCUMENTS CONSIDERED TO BE RELEVANT

| Category* | Citation of document, with indication, where appropriate, of the relevant passages | Relevant to claim No. |
|---|---|---|
| A | KR 10-2014-0140976 A (LG CHEM, LTD.) 10 December 2014 (2014-12-10)<br>See claims 1-18. | 1-13 |
| A | JP 2021-044162 A (TOYOTA MOTOR CORP.) 18 March 2021 (2021-03-18)<br>See claims 1-7. | 1-13 |
| A | KR 10-2016-0146580 A (LG CHEM, LTD.) 21 December 2016 (2016-12-21)<br>See claims 1-22. | 1-13 |
| A | KR 10-2021-0012755 A (LG CHEM, LTD.) 03 February 2021 (2021-02-03)<br>See claims 1-12. | 1-13 |
| A | KR 10-2019-0000849 A (LG CHEM, LTD.) 03 January 2019 (2019-01-03)<br>See claims 1-10. | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 March 2024** | **05 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/019400**

| Patent document cited in search report | | | Publication date (day/month/year) | Patent family member(s) | | | Publication date (day/month/year) |
|---|---|---|---|---|---|---|---|
| KR | 10-2014-0140976 | A | 10 December 2014 | None | | | |
| JP | 2021-044162 | A | 18 March 2021 | CN | 112582621 | A | 30 March 2021 |
| | | | | DE | 102020211226 | A1 | 11 March 2021 |
| | | | | JP | 7161680 | B2 | 27 October 2022 |
| | | | | KR | 10-2021-0031394 | A | 19 March 2021 |
| | | | | KR | 10-2463329 | B1 | 04 November 2022 |
| | | | | US | 11757084 | B2 | 12 September 2023 |
| | | | | US | 2021-0074994 | A1 | 11 March 2021 |
| | | | | US | 2023-378430 | A1 | 23 November 2023 |
| KR | 10-2016-0146580 | A | 21 December 2016 | CN | 107580732 | A | 12 January 2018 |
| | | | | CN | 107580732 | B | 27 October 2020 |
| | | | | EP | 3309879 | A1 | 18 April 2018 |
| | | | | EP | 3309879 | B1 | 03 October 2018 |
| | | | | JP | 2018-523281 | A | 16 August 2018 |
| | | | | JP | 6732294 | B2 | 29 July 2020 |
| | | | | KR | 10-1937897 | B1 | 14 January 2019 |
| | | | | US | 10476081 | B2 | 12 November 2019 |
| | | | | US | 2018-0159131 | A1 | 07 June 2018 |
| | | | | WO | 2016-200223 | A1 | 15 December 2016 |
| KR | 10-2021-0012755 | A | 03 February 2021 | CN | 112689915 | A | 20 April 2021 |
| | | | | EP | 3836254 | A1 | 16 June 2021 |
| | | | | KR | 10-2537264 | B1 | 30 May 2023 |
| | | | | US | 2021-0359294 | A1 | 18 November 2021 |
| | | | | WO | 2021-020844 | A1 | 04 February 2021 |
| KR | 10-2019-0000849 | A | 03 January 2019 | CN | 110199413 | A | 03 September 2019 |
| | | | | CN | 110199413 | B | 24 May 2022 |
| | | | | EP | 3547404 | A1 | 02 October 2019 |
| | | | | JP | 2020-501328 | A | 16 January 2020 |
| | | | | JP | 2022-125251 | A | 26 August 2022 |
| | | | | JP | 7350944 | B2 | 26 September 2023 |
| | | | | US | 11316150 | B2 | 26 April 2022 |
| | | | | US | 2019-0229330 | A1 | 25 July 2019 |
| | | | | WO | 2018-236200 | A1 | 27 December 2018 |

Form PCT/ISA/210 (patent family annex) (July 2022)

**EP 4 465 387 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220166976